# EUROPEAN PATENT APPLICATION

(11) **EP 2 090 448 A1**
(43) Date of publication of application: **19.08.2009**
(21) Application number: 09001251.9
(22) Date of filing: 29.01.2009
(51) Int. Cl.: B60H 1/32, B60H 1/00

(54) **Air conditioning system for vehicle**

(30) Priority: 18.02.2008 JP 2008036407
(71) Applicant: Calsonic Kansei Corporation, Saitama-shi Saitama 331-8501 (JP)
(72) Inventor: Takahashi, Torahide, Saitama-shi Saitama 331-8501 (JP)
(74) Representative: Grünecker, Kinkeldey, Stockmair & Schwanhäusser Anwaltssozietät

(57) **Abstract**

An air conditioning system includes an air-cooling unit and an air-heating unit. On a first path in the cooling-unit, provided are a compressor for first refrigerant, a condenser for the first refrigerant, an expansion unit for the first refrigerant, and an evaporator to cool air. On a second path in the air-heating unit, provided are an air-conditioning radiator for second refrigerant, and a first valve for the second refrigerant (whether or not into the air-conditioning radiator). On a third path in the air-heating unit, provided are a driving-system heating element to heat third refrigerant, an internal heat exchanger to heat the third refrigerant, a heater core to heat air, a driving-system radiator for the third refrigerant, and a second valve for the third refrigerant (whether or not into the driving-system radiator). The air passing through the evaporator or the heater core is selectably sent into a vehicle compartment.

## Description

### BACKGROUND OF THE INVENTION

### 1. Field of the Invention

The present invention relates to an air conditioning system for a vehicle that can achieve air-heating and air-cooling.

### 2. Description of Related Art

A conventional air conditioning system is disclosed in Japanese Patent Application Laid-Open Number 2002-98430. As shown in Fig. 18, the air conditioning system includes a heat-pump type cooling unit C and an air-heating circulation unit D. The heat-pump type cooling unit C has a first circulation path 100 along which first refrigerant circulates. The air-heating circulation unit D has a second circulation path 110 along which second refrigerant (water) circulates and a third circulation path 120 along which third refrigerant (water) circulates.

A compressor 101, a heat-radiating side of an internal heat exchanger 102, an in-compartment heat exchanger 103, an expansion valve 104, an external heat exchanger 105 and an accumulator 109 are provided on the first circulation path 100 in the heat-pump type cooling unit C. The in-compartment heat exchanger 103 is provided within an air-conditioning duct 106 opened toward a vehicle compartment. Variety of bypass paths 100a and 100b and many of changeover valves 107 for changing over paths of the first refrigerant are provided on the first circulation path 100.

In a heating mode, each of the internal heat exchanger 102 and the in-compartment heat exchanger 103 functions as a condenser to radiate heat from the first refrigerant. In addition, the external heat exchanger 105 functions as an evaporator to receive heat by the first refrigerant. In a cooling mode, the external heat exchanger 105 functions as a condenser to radiate heat from the first refrigerant. In addition, the in-compartment heat exchanger 103 functions as an evaporator to receive heat by the first refrigerant. The paths are changed over to achieve the above functions in each mode.

A pump 111 for circulating the second refrigerant, a heater core 113, a heat-receiving side of the internal heat exchanger 102 and a fuel-cell stuck (heating element in a vehicle driving system) 122 are provided on the second circulation path 110 in the air-heating circulation unit D. The heater core 113 is provided within the air-conditioning duct 106 opened toward the vehicle compartment.

A pump 121 for circulating the third refrigerant, the fuel-cell stuck (heating element in a vehicle driving system) 122, a radiator 123, a bypass path 124 for bypassing the radiator 123 and a changeover valve 125 are provided on the third recirculation path 120 in the air-heating circulation unit D. The changeover valve 125 changes the flowing path of the third refrigerant to the radiator 123 or to the bypass path 124.

In the heating mode, the vehicle compartment is air-heated by heat sources, as which the in-compartment heat exchanger 103 in the heat-pump type cooling unit C, the heater core 113 and the fuel-cell stuck 122 function. In the cooling mode, the vehicle compartment is air-cooled by a cool source, as which the in-compartment heat exchanger 103 in the heat-pump type cooling unit C functions.

In the above conventional air-conditioning system, air-heating and air-cooling are achieved by using the heat-pump type cooling unit C and waste heat from cooling water of the fuel-cell stuck 122. Therefore, heat source can be used effectively in a vehicle with little heat source in order to achieve fuel efficiency improvement, heating performance improvement under a very low temperature condition.

### SUMMARY OF THE INVENTION

However, in the above conventional air-conditioning system, the bypass paths 100a and 100b and the changeover valves 107 are needed in order to change the flowing path of the first refrigerant in the heat-pump type cooling unit C between the heating mode and the cooling mode. As a result, structure of the heat-pump type cooling unit C must be complex.

Therefore, an object of the present invention is to provide an air conditioning system for a vehicle that achieves air-heating and air-cooling by using waste heat of a heat-pump type cooling unit and waste heat from a heating element in a vehicle driving system and can achieve a simple structure of the heat-pump type cooling unit.

An aspect of the present invention is to provide an air conditioning system for a vehicle that includes a heat-pump type cooling unit including a first circulation path in which first refrigerant circulates and an air-heating unit including a second circulation path in which second refrigerant circulates and a third circulation path in which a third refrigerant circulates. Each of the second and third refrigerants is liquid and capable of taking sensible heat change due to heat-changing. A compressor for compressing the first refrigerant, a condenser for radiating heat of the first refrigerant to the second refrigerant and also provided on the second circulation path, an expansion unit for expanding the first refrigerant, and an evaporator for heat-exchanging between the first refrigerant expanded by the expansion unit and air to cool the air are provided on the first circulation path. A first pump for circulating the second refrigerant, an air-conditioning radiator for radiating heat of the second refrigerant, and a first flow-path changeover unit for changing over the second refrigerant flowing to flow into the air-conditioning radiator or to bypass the air-conditioning radiator are provided on the second circulation path. A second pump for circulating the third refrigerant, a driving-system heating element for heat-exchanging with the third refrigerant, an internal heat exchanger for heat-exchanging with the second refrigerant to heat the third refrigerant, a heater core for heat-exchanging between the third refrigerant and air to heat the air, a driving-system radiator for radiating heat of the third refrigerant, and a second flow-path changeover unit for changing over the third refrigerant flowing to flow into the driving-system radiator or to bypass the driving-system radiator based on temperature of the third refrigerant are provided on the third circulation path. The system is configured to send the air passing through the evaporator or the air passing through the heater core into a vehicle compartment selectably.

According to the aspect of the present invention, during air-heating, the heat obtained at the condenser and from the driving-system heating element is radiated to the air passing through the heater core. This heated air is sent to the vehicle compartment. During air-cooling, the first refrigerant receives heat from the air passing through the evaporator. This cooled air passing through the evaporator is sent to the vehicle compartment. Note that the waste heat of the heat-pump type cooling unit is discharged to the air outside the vehicle compartment at the air-conditioning radiator. The waste heat of the driving-system heating element is discharged to the air outside the vehicle compartment at the driving-system radiator. Air-heating and air-cooling can be achieved in this manner. Here, the first refrigerant in the heat-pump type cooling unit is circulated along the first circulation path (it is a fixed flowing path) regardless the operation modes (air-heating or air-cooling). Therefore, the heat-pump type cooling unit can be simplified in the air-conditioning system that achieves air-heating and air-cooling by using the waste heat of the heat-pump type cooling unit and the driving-system heating element.

It is preferable that the air-conditioning radiator and the driving-system radiator are provided integrally.

According to this configuration, the air-conditioning radiator and the driving-system radiator can be made down-sized and thereby their costs can be reduced.

It is preferable that the internal heat exchanger includes a heat-radiating section and a heat-receiving section, the heat-radiating section and the heat-receiving section are made coherent, and the second refrigerant flows through the heat-radiating section and the third refrigerant flows through the heat-receiving section.

According to this configuration, heat-exchanging can be achieved in case where the second and third refrigerants are different.

It is preferable that the internal heat exchanger includes a heat exchanger through which at least one of the second and third refrigerants flows and the heat exchanger is provided within a flowing path through which another of the second and third refrigerants flows.

According to this configuration, it can be applied to the case where the second and third refrigerants are different. In addition, good heat-exchange efficiency of the second and third refrigerants can be achieved.

It is preferable that the internal heat exchanger is a refrigerant-confluent unit into which the second and third refrigerants flow together.

According to this configuration, configuration of the internal heat exchanger can be simplified and better heat-exchange efficiency can be achieved.

It is preferable that a third flow-path changeover unit for changing over the second refrigerant flowing to flow into the internal heat exchanger or to bypass the internal heat exchanger, is further provided on the second circulation path.

According to this configuration, heat-radiation from the heater core during the air-cooling operation can be prevented.

It is preferable that a fourth flow-path changeover unit for changing over whether or not to flow the third refrigerant to the internal heat exchanger and the heater core, is further provided on the third circulation path.

According to this configuration, heat-radiation from the heater core during the air-cooling operation can be prevented without providing any bypass path.

It is preferable that the system is configured to make the third circulation path into two circulation forms selectably. In one of the circulation forms, the third refrigerant circulates along an integrated circulation path integrally to flow through the driving-system heating element, the driving-system radiator, the heater core and the internal heat exchanger. In another of the circulation forms, the third refrigerant circulates respectively along one divided circulation path to flow through the driving-system heating element and the driving-system radiator and another divided circulation path to flow through the heater core and the internal heat exchanger.

According to this configuration, the air-hating operation can take two operation modes, a quick-heating mode with the integrated circulation path and an engine warming-up / stable-heating mode with the divided circulation paths. In the quick-heating mode, the quick-heating performance can be improved because the heat of the heat-pump type cooling unit can be used for air-heating without heating the driving-system heating element by using the integrated circulation path. In the engine warming-up / stable-heating mode, fuel efficiency and so on are improved because the waste heat of the driving-system heating element can be also used for air-heating by using the divided circulation paths.

It is preferable that a combined path is provided on the second and third circulation paths and commonly belongs to the second and third circulation paths, the heater core is provided on the combined path, and the system is configured to make the third circulation path into two circulation forms selectably. In one of the circulation forms, the third refrigerant circulates along an integrated circulation path integrally to flow through the driving-system heating element, the driving-system radiator, the heater core and the internal heat exchanger. In another of the circulation forms, the third refrigerant circulates respectively along one divided circulation path to flow through the driving-system heating element and the driving-system radiator and another divided circulation path to flow through the heater core and the internal heat exchanger.

According to this configuration, configurations of the air-heating circulation unit can be simplified because some segment of the second and third circulation paths is integrated and the integrated circulation path or the divided circulation paths can be made selectably.

It is preferable that the pumps in the air-heating unit are integrated by a single pump.

According to this configuration, cost for the pump (s) can be reduced and configurations of the air-heating circulation unit can be simplified.

It is preferable that a heater is provided on at least one of the second and third circulation paths.

According to this configuration, sufficient heating performance can be achieved under a very low temperature condition in a vehicle with little heat source because heat from the heat-pump type cooling unit and the heater can be used for air-heating during the air-heating operation.

### BRIEF DESCRIPTION OF THE DRAWINGS

Fig. 1 is a configuration diagram of an air conditioning system according to a first embodiment of the present invention;
Fig. 2 is a configuration diagram showing refrigerant flows during air-heating in the first embodiment;
Fig. 3 is a configuration diagram showing refrigerant flows during air-cooling in the first embodiment;
Fig. 4 is a configuration diagram of an air conditioning system according to a second embodiment of the present invention;
Fig. 5 is a configuration diagram showing refrigerant flows during air-heating in the second embodiment;
Fig. 6 is a configuration diagram showing refrigerant flows during air-cooling in the second embodiment;
Fig. 7 is a configuration diagram of an air conditioning system according to a third embodiment of the present invention;
Fig. 8 is a configuration diagram showing refrigerant flows during air-heating in the third embodiment;
Fig. 9 is a configuration diagram showing refrigerant flows during air-cooling in the third embodiment;
Fig. 10 is a configuration diagram of an air conditioning system according to a fourth embodiment of the present invention;
Fig. 11 is a configuration diagram showing refrigerant flows during air-heating (quick-heating mode) in the fourth embodiment;
Fig. 12 is a configuration diagram showing refrigerant flows during air-heating (engine warming-up / stable-heating mode) in the fourth embodiment;
Fig. 13 is a configuration diagram showing refrigerant flows during air-cooling in the fourth embodiment;
Fig. 14 is a configuration diagram of an air conditioning system according to a fifth embodiment of the present invention;
Fig. 15 is a configuration diagram showing refrigerant flows during air-heating (quick-heating mode) in the fifth embodiment;
Fig. 16 is a configuration diagram showing refrigerant flows during air-heating (engine warming-up / stable-heating mode) in the fifth embodiment;
Fig. 17 is a configuration diagram showing refrigerant flows during air-cooling in the fifth embodiment; and

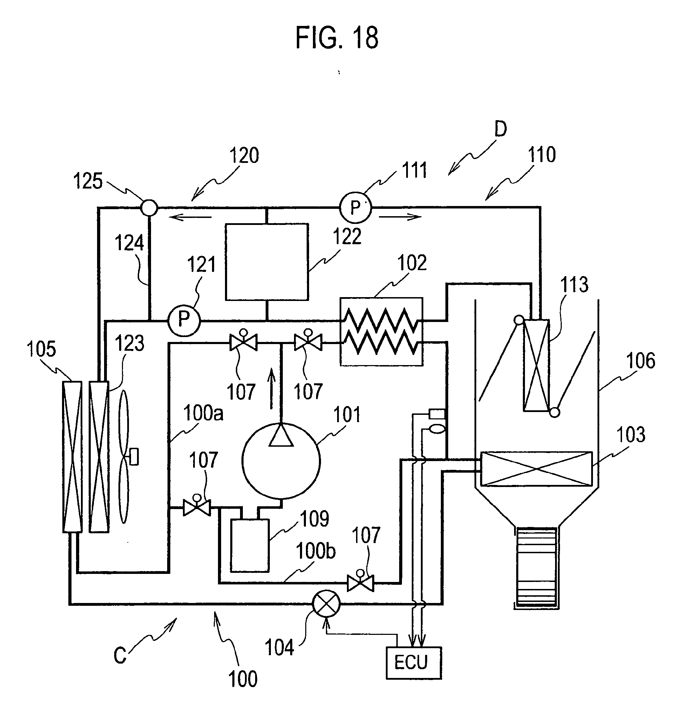

Fig. 18 is a configuration diagram of a conventional air conditioning system for a vehicle.

### DETAILED DESCRIPTION OF THE EMBODIMENT

Hereinafter, embodiments according to the present invention will be explained with reference to drawings.

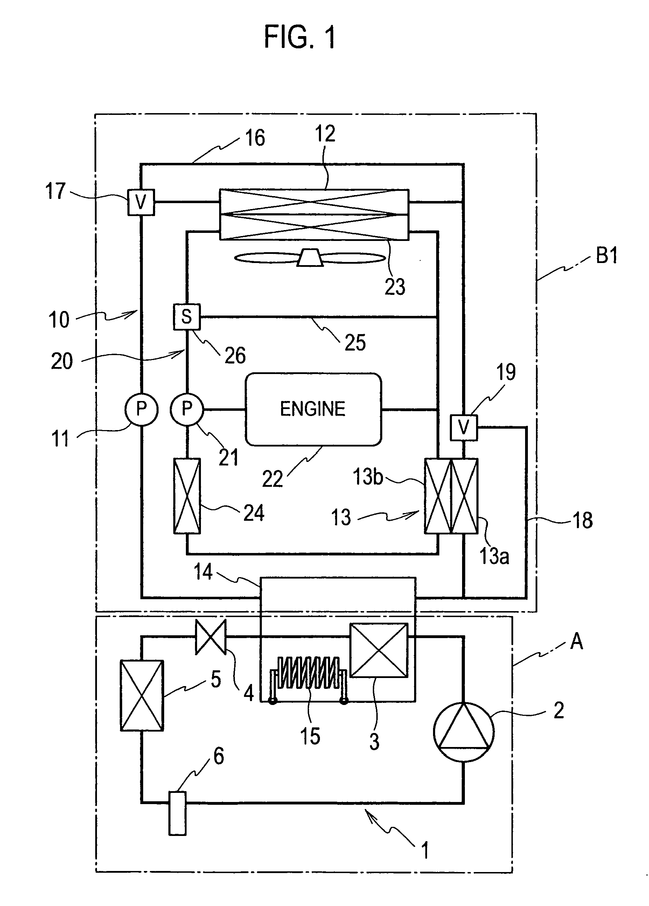

A first embodiment of an air conditioning system for a vehicle according to the present invention will be explained with reference to Figs. 1 to 3. As shown in Fig. 1, the air conditioning system is combined of a heat-pump type cooling unit A and an air-heating circulation unit B1.

The heat-pump type cooling unit A includes a first circulation path 1. The first circulation path 1 is filled with first refrigerant (CO₂). A compressor 2, a water-cooled condenser 3, an expansion valve (expansion unit) 4, an evaporator 5 and a accumulator 6 are provided on the first circulation path 1 in this order.

The compressor 2 inhales the relatively low-temperature and pressure first refrigerant and discharges the high-temperature and pressure first refrigerant after compressing it.

The water-cooled condenser 3 is arranged within an after-mentioned unit container 14 on the second circulation path 10. The first refrigerant output from the compressor 2 is cooled by the second refrigerant. Specifically, heat-exchanging is achieved between the first refrigerant and the second refrigerant at the water-cooled condenser 3. The second refrigerant is heated by the first refrigerant.

The expansion valve 4 expands the first refrigerant (reduce the pressure of the first refrigerant) had passed through the water-cooled condenser 3 and sends it to the evaporator 5 as a low-temperature and pressure gas.

The evaporator 5 achieves heat-exchanging between the first refrigerant liquid output from the expansion valve 4 and air passing through the evaporator 5. The air passing through the evaporator 5 is cooled down by the first refrigerant. The evaporator 5 is provided within an air-conditioning duct (not shown). Cooled air passing through the evaporator 5 is send to an inside or an outside of a vehicle compartment.

The accumulator 6 separates the first refrigerant output from the evaporator 5 into gas phase and liquid phase. The accumulator 6 sends out the first refrigerant in the gas phase to the compressor 2 and temporally holds the first refrigerant in the liquid phase therein.

The air-heating circulation unit B1 includes a second circulation path 10. The second circulation path 10 is filled with second refrigerant (liquid such as water and antifreeze solution). A first pump 11, an air-conditioning radiator 12, a heat-radiating section 13a of the internal heat exchanger 13 and the unit container 14 are provided on the second circulation path 10 in this order. The unit container 14 is a space having a larger cross-sectional area than that of the second circulation path 10. The above-mentioned water-cooled condenser 3 and an electric heater 15 are contained within the unit container 13.

The first pump 11 inhales the second refrigerant and then pumps it out in order to circulates it along the second circulation path 10. The second refrigerant liquid pumped by the first pump 11 circulates along the second circulation path 10 in liquid phase without changing its phase. The second refrigerant takes sensible heat change due to heat-changing.

The air-conditioning radiator 12 is a unit for radiating heat of the second refrigerant to fresh air. The fresh air is blown to the radiator 12 by an electric fan or air flow due to a vehicle running and then heat-exchange is achieved between the second refrigerant and the fresh air. The air-conditioning radiator 12 is provided integrally with an after-mentioned radiator 23 in a vehicle driving system (driving-system radiator 23).

The internal heat exchanger 13 includes the heat-radiating section 13a and a heat-receiving section 13b. The second refrigerant flows through the heat-radiating section 13a and the third refrigerant flows through the heat-receiving section 13b. The heat-radiating section 13a and the heat-receiving section 13b are made coherent each other. The third refrigerant is heated by the second refrigerant within the internal heat exchanger 13.

The electric heater 15 is provided downstream of the water-cooled condenser 3 and heats the second refrigerant by its heat with being energized.

A radiator-bypass path 16 is provided in the second circulation path 10 so as to bypass the air-conditioning radiator 12. The second refrigerant flowing can be changed into the air-conditioning radiator 12 or the radiator-bypass path 16 by changing over a first flow-path changeover valve (first flow-path changeover unit) 17 provided upstream of the radiator 12.

A heat-exchanger-bypass path 18 is provided in the second circulation path 10 so as to bypass the heat-radiating section 13a of the internal heat exchanger 13. The second refrigerant flowing can be changed into the heat-radiating section 13a or the heat-exchanger-bypass path 18 by changing over a third flow-path changeover valve (third flow-path changeover unit) 19 provided upstream of the heat-radiating section 13a.

The air-heating circulation unit B1 includes a third circulation path 20. The third circulation path 20 is filled with third refrigerant (liquid such as water, antifreeze solution or the like). A second pump 21, an engine 22, the driving-system radiator 23, the heat-receiving section 13b of the internal heat exchanger 13 and a heater core 24 are provided on the third circulation path 10. The engine 22 is an internal combustion engine as a heating element in a vehicle driving system with low water temperature.

The second pump 21 inhales the third refrigerant and then pumps it out in order to circulates it along the third circulation path 20. The third refrigerant liquid pumped by the second pump 21 circulates along the third circulation path 20 in liquid phase without changing its phase. The third refrigerant takes sensible heat change due to heat-changing. In the present embodiment, the same liquid is used as the second and third refrigerants.

The engine 22 is driven with a low water temperature and used for an environmental protection vehicle due to its good engine efficiency. The engine 22 is maintained with a desired temperature by heat-exchanging with the third refrigerant.

The driving-system radiator 23 is a unit for radiating heat of the third refrigerant to fresh air. The fresh air is blown to the driving-system radiator 23 by an electric fan or air flow due to a vehicle running and then heat-exchange is achieved between the third refrigerant and the fresh air.

The heater core 24 heats air passing through it by achieving heat-exchanging between the third refrigerant and the air passing through it. The heater core 24 is provided within the air-conditioning duct (not shown). The air passing thorough the heater core 24 can be sent into a vehicle compartment.

A radiator-bypass path 25 is provided in the third circulation path 20 so as to bypass the driving-system radiator 23. The third refrigerant flowing can be changed into the driving-system radiator 23 or the radiator-bypass path 25 by changing over a thermostat (second flow-path changeover unit) 26 provided downstream of the driving-system radiator 23. Specifically, the thermostat 26 changes over the third refrigerant flowing according to temperature of the third refrigerant. When the temperature of the third temperature is lower than a preset value, the thermostat 26 is changed over so as to flow the third refrigerant through the radiator-bypass path 25. When the temperature of the third temperature is equal-to or higher-than the preset value, the thermostat 26 is changed over so as to flow the third refrigerant through the driving-system radiator 23. Therefore, the temperature of the third refrigerant, in other words the temperature of the engine 22, is controlled within a predetermined temperature range.

Next, behavior of the above air conditioning system will be explained.

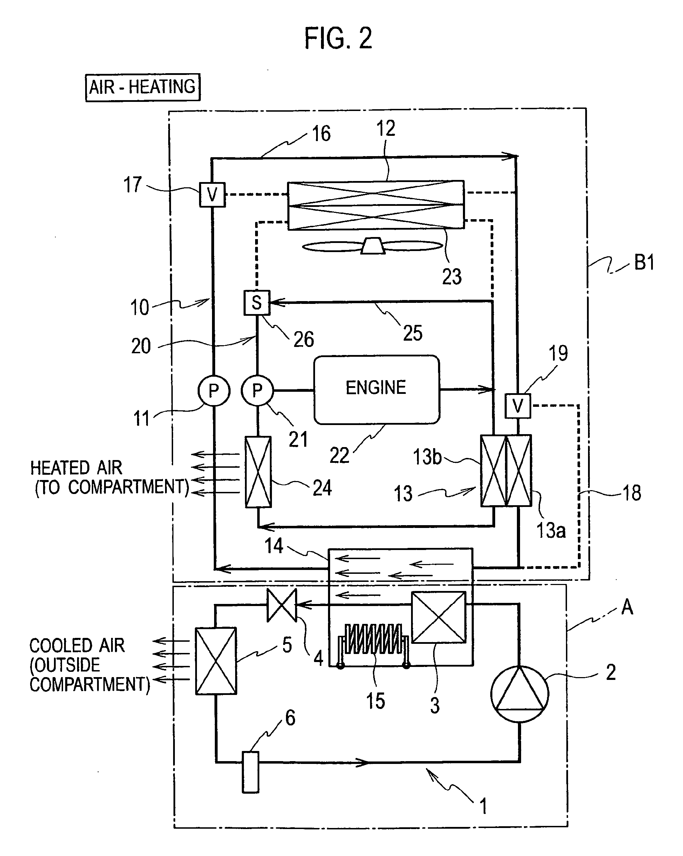

On an air-heating operation being selected as shown in Fig. 2, the compressor 2 is driven in the heat-pump type cooling unit A. In the air-heating circulation unit B1, the first flow-path changeover valve 17 is changed over so as to flow the second refrigerant through the radiator-bypass path 16 and the third flow-path changeover valve 19 is changed over so as to flow the second refrigerant through the internal heat exchanger 13. The first pump 11 and the second pump 21 are driven.

In the heat-pump type cooling unit A, the first refrigerant radiates its heat at the water-cooled condenser 3 and receive heat from air at the evaporator 5. The air passing through the evaporator 5 is discharged outside the vehicle compartment. In the water-cooled condenser 3, heat of the first refrigerant is radiated to the second refrigerant and thereby the second refrigerant is heated. Heat-exchanging between the heated second refrigerant and the third refrigerant is achieved at the internal heat exchanger 13 and thereby the third refrigerant is heated. Heat of the third refrigerant is radiated to air at the heater core 24 and thereby the air passing through the heater core 24 is heated. The heated air is sent into the vehicle compartment for air-heating.

On driving the engine 22, heat of the engine 22 is radiated to the third refrigerant. When the temperature of the third refrigerant reaches up to the preset value, the heat of the engine is also used for air-heating. Namely, air-heating is achieved by the heat of the heat-pump type cooling unit A and the heat of the engine 22.

In addition, if the electric heater 15 is used, the air-heating performance is further improved due to heat generated by the electric heater 15. As a result, the air-heating performance can be given sufficiently even under a very low temperature condition.

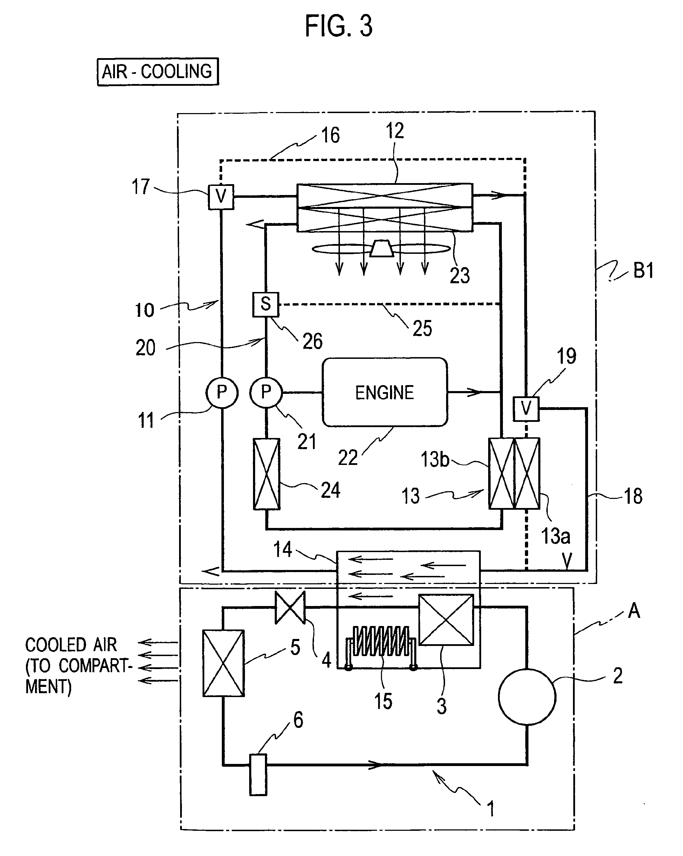

On an air-cooling operation being selected as shown in Fig. 3, the compressor 2 is driven in the heat-pump type cooling unit A. In the air-heating circulation unit B1, the first flow-path changeover valve 17 is changed over so as to flow the second refrigerant through the air-conditioning radiator 12 and the third flow-path changeover valve 19 is changed over so as to flow the second refrigerant through the heat-exchanger-bypass path 18. The first pump 11 and the second pump 21 are driven.

In the heat-pump type cooling unit A, the first refrigerant radiates its heat at the water-cooled condenser 3 and receive heat from air at the evaporator 5. The air passing through the evaporator 5 is cooled. The cooled air is sent into the vehicle compartment for air-cooling.

In addition, heat of the first refrigerant is radiated to the second refrigerant in the water-cooled condenser 3 and thereby the second refrigerant is heated. Heat of the heated second refrigerant is radiated at the air-conditioning radiator 12. Further, the thermostat 26 is changed over so as to flow the third refrigerant through the driving-system radiator 23 when the temperature of the engine 22 reaches up to the preset value. Superfluous heat (waste heat) of the engine 22 is discharged at the driving-system radiator 23. In this manner, waste heat of the heat-pump type cooling unit A and the engine is discharged to air outside the vehicle compartment.

In the present embodiment as explained above, air-heating is achieved as follows. The heat obtained at the water-cooled condenser 3 and from the engine 22 is radiated to the air passing through the heater core 24. This heated air is sent to the vehicle compartment. The cooled air passing through the evaporator 5 is discharged outside the vehicle compartment. On the other hand, air-cooling is achieved as follows. The first refrigerant receives heat from the air passing through the evaporator 5. This cooled air passing through the evaporator 5 is sent to the vehicle compartment. The waste heat of the heat-pump type cooling unit A is discharged to the air outside the vehicle compartment at the air-conditioning radiator 12. The waste heat of the engine 22 is discharged to the air outside the vehicle compartment at the driving-system radiator 23. The first refrigerant in the heat-pump type cooling unit A is circulated along the first circulation path 1 (it is a fixed flowing path) regardless the operation modes (air-heating or air-cooling). Therefore, the heat-pump type cooling unit A can be simplified in the air-conditioning system that achieves air-heating and air-cooling by using the waste heat of the heat-pump type cooling unit A and the engine 22.

In the present embodiment, the air-conditioning radiator 12 and the driving-system radiator 23 are provided integrally. Therefore, the air-conditioning radiator 12 and the driving-system radiator 23 can be made down-sized and thereby their costs can be reduced. Since an identical pressure-resistance specification can be applied to both the air-conditioning radiator 12 and the driving-system radiator 23, an identical part (s) can be commonly used and thereby their costs can be reduced in this point due to their easily manufacturing.

In the present embodiment, the internal heat exchanger 13 is constructed by arranging the heat-radiating section 13a, through which the second refrigerant flows, and the heat-receiving section 13b, through which the third refrigerant flows, coherent each other. Although the second and third refrigerants are the same in the present embodiment, heat-exchanging can be achieved in case where the second and third refrigerants are different.

In the present embodiment, the third flow-path changeover valve 19 is provided on the second circulation path 10 to change over the second refrigerant flowing to flow into the internal heat exchanger 13 or to bypass the internal heat exchanger 13. Therefore, heat-radiation from the heater core 24 during the air-cooling operation can be prevented.

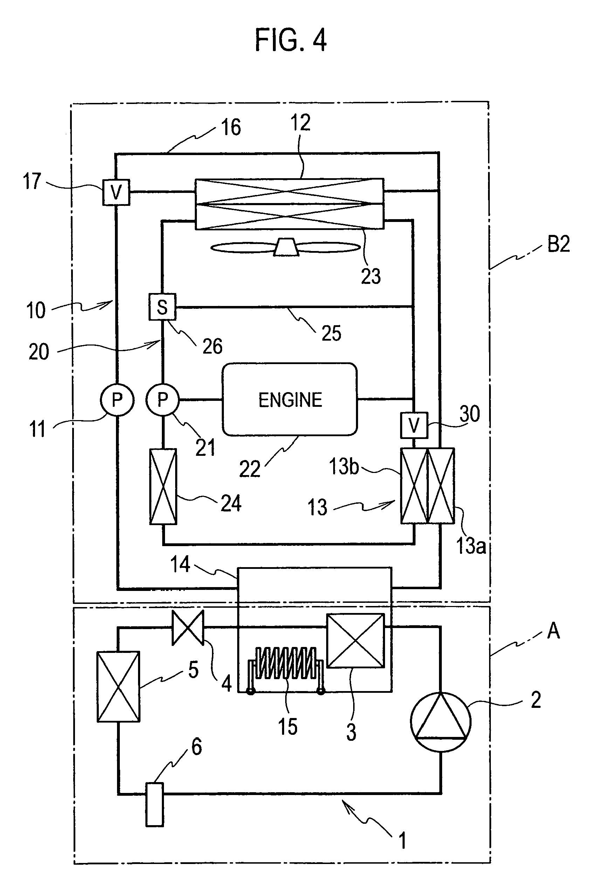

Next, a second embodiment of an air conditioning system for a vehicle according to the present invention will be explained with reference to Figs. 4 to 6. In the second embodiment as shown in Fig. 2, the heat-exchanger-bypass path 18 and the third flow-path changeover valve 19 are not provided on the second circulation path 10 in a air-heating circulation unit B2 as compared with the first embodiment. Instead of them, a fourth flow-path changeover valve (fourth flow-path changeover unit) 30 is provided just upstream of the heat-receiving section 13b of the internal heat exchanger 13 on the third circulation path 20 in the air-heating circulation unit B2. The fourth flow-path changeover valve 30 is used to close or open a flowing path of the third refrigerant. Specifically, the fourth flow-path changeover valve 30 changes over whether or not to flow the third refrigerant to the heat-receiving section 13b and the heater core 24.

Since other configurations in the present embodiment are equal or similar to those in the above-described first embodiment, redundant explanations will be omitted by allocating identical numerals to the identical or similar configurations.

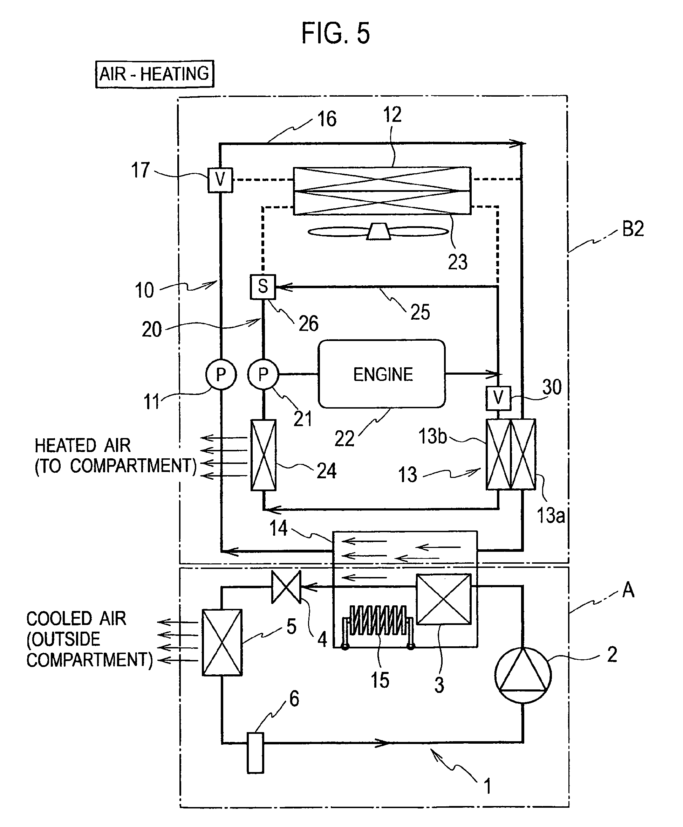

On an air-heating operation being selected as shown in Fig. 5, the fourth flow-path changeover valve 30 is changed over so as to flow the third refrigerant through the heat-receiving section 13b in the internal heat exchanger 13 and the heater core 24. Other controls are the same as those in the first embodiment. The air-heating in the vehicle compartment is achieved by the heat of the heat-pump type cooling unit A and the engine 22.

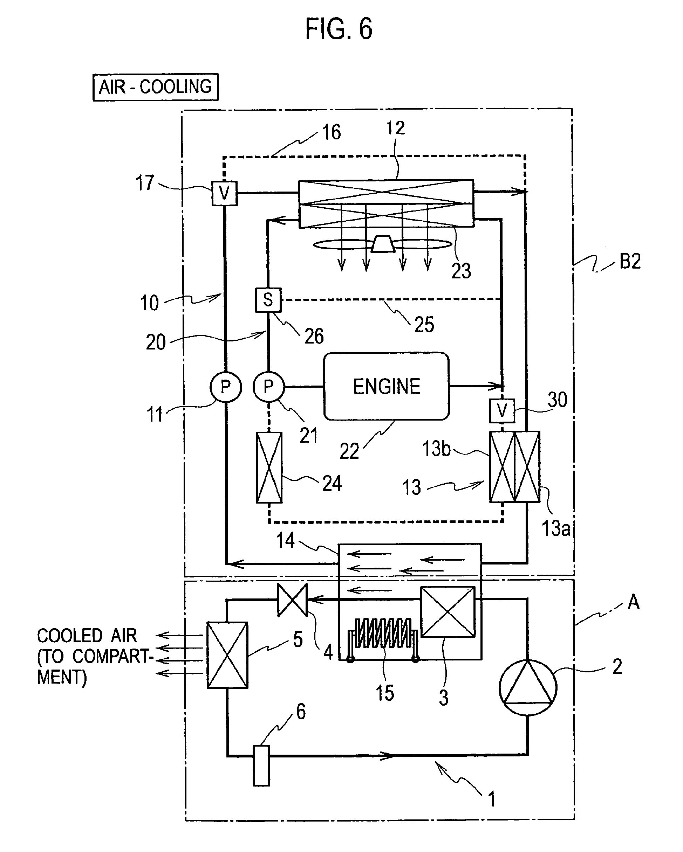

On an air-cooling operation being selected as shown in Fig. 6, the fourth flow-path changeover valve 30 is changed over so as not to flow the third refrigerant through the heat-receiving section 13b in the internal heat exchanger 13 and the heater core 24. Other controls are the same as those in the first embodiment. The air-heating in the vehicle compartment is achieved by the air passing through the evaporator 5. In addition, the waste heat of the heat-pump type cooling unit A and the engine 22 is discharged to air outside the vehicle compartment.

In the present embodiment, the heat-pump type cooling unit A can be simplified in the air-conditioning system that achieves air-heating and air-cooling by using the waste heat of the heat-pump type cooling unit A and the engine 22 as similarly as the first embodiment.

In the present embodiment, the fourth flow-path changeover valve 30 is provided to change over whether or not to flow the third refrigerant to the internal heat exchanger 13 and the heater core 24. Therefore, it is unnecessary to provide the heat-exchanger-bypass path 18 as in the first embodiment and thereby heat-radiation from the heater core 24 during the air-cooling operation can be prevented.

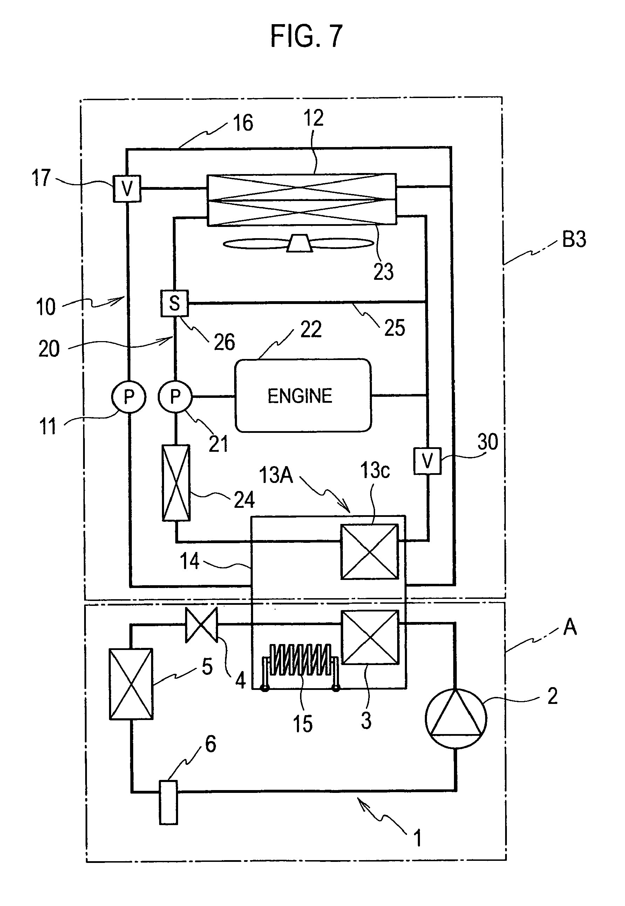

Next, a third embodiment of an air conditioning system for a vehicle according to the present invention will be explained with reference to Figs. 7 to 9. In the third embodiment as shown in Fig. 7, an internal heat exchanger 13A in an air-heating circulation unit B3 is different as compared with the second embodiment.

The internal heat exchanger 13A includes a heat exchanger 13c through which the third refrigerant flows. The heat exchanger 13c is provided within the unit container 14 inside which the second refrigerant flows. In other words, the water-cooled condenser 3 and the heat exchanger 13c are provided within the unit container 14 on the second circulation path 10.

Since other configurations in the present embodiment is equal or similar to those in the second embodiment, redundant explanations will be omitted by allocating identical numerals to the identical or similar configurations.

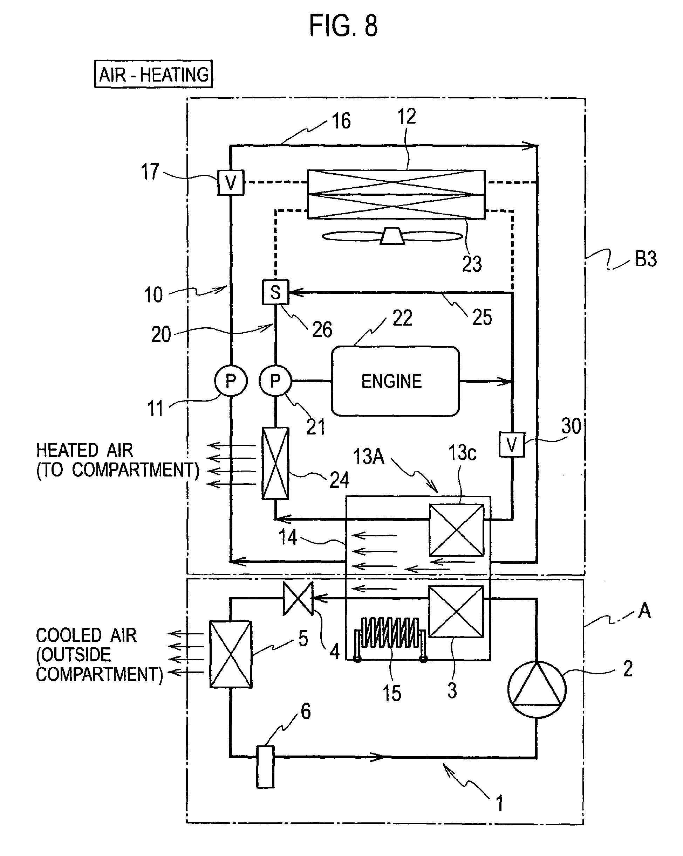

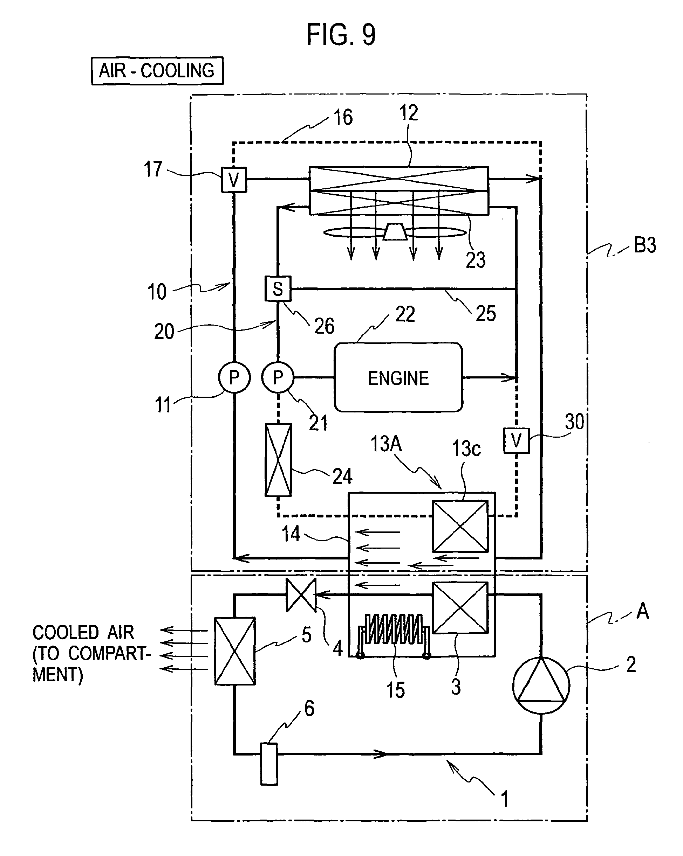

As shown in Fig. 8, operations during air-heating are almost the same as the second embodiment. As shown in Fig. 9, operations during air-cooling are almost the same as the second embodiment.

In the present embodiment, the heat-pump type cooling unit A can be simplified in the air-conditioning system that achieves air-heating and air-cooling by using the waste heat of the heat-pump type cooling unit A and the engine 22 as similarly as the second embodiment.

In the present embodiment, the internal heat exchanger 13A includes the heat exchanger 13c through which the third refrigerant flows and the heat exchanger 13c is provided on (within) the flowing path of the second refrigerant, more specifically within the unit container 14. Therefore, this configuration can be applied to the case where the second and third refrigerants are different. In addition, heat-exchange efficiency is better than the first and second embodiments.

On the contrary, it may be possible that the internal heat exchanger 13A includes a heat exchanger through which the second refrigerant flows and the heat exchanger is provided on (within) the flowing path of the third refrigerant.

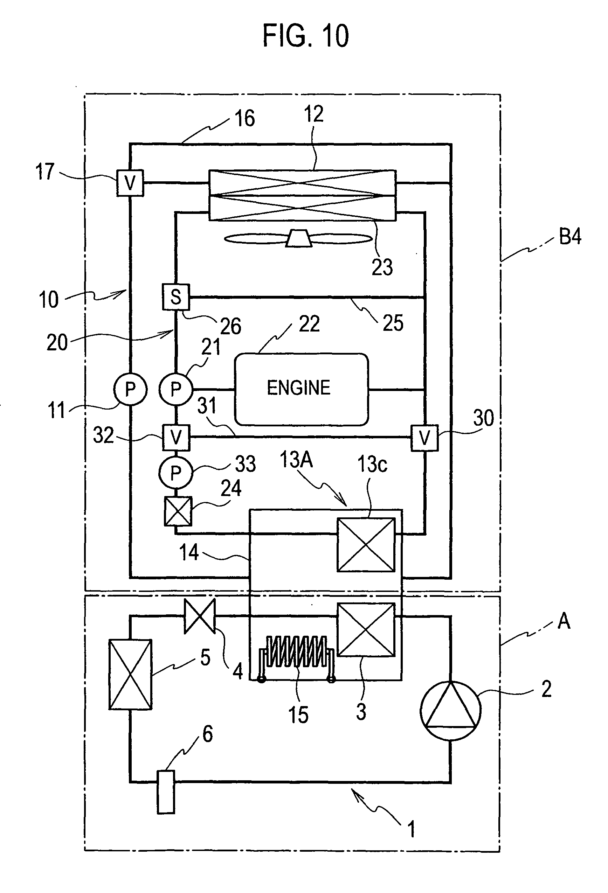

Next, a fourth embodiment of an air conditioning system for a vehicle according to the present invention will be explained with reference to Figs. 10 to 13. In the fourth embodiment as shown in Fig. 10, the third circulation path 20 on an air-heating circulation unit B4 is different as compared with the third embodiment.

Specifically, a branching path 31, a fifth flow-path changeover valve (fifth flow-path changeover unit) 32 and a third pump 33 are further provided on the third circulation path 20. The branching path 31 divides the third circulation path 20 into a circulation system of the engine 22 and another circulation system of the heater core 24. The fifth flow-path changeover valve 32 changes over whether or not to flow the third refrigerant to the branching path 31. The third pump 33 is provided for the branching path 31. The branching path 31 is interposed between the fourth flow-path changeover valve 30 and the fifth flow-path changeover valve 32. It can be controlled by changing over the fourth flow-path changeover valve 30 and the fifth flow-path changeover valve 32 whether or not to flow the third refrigerant to the branching path 31. Although the fourth flow-path changeover valve 30 is used to close or open the flowing path in the above third embodiment, it is used to change over or close the flowing path.

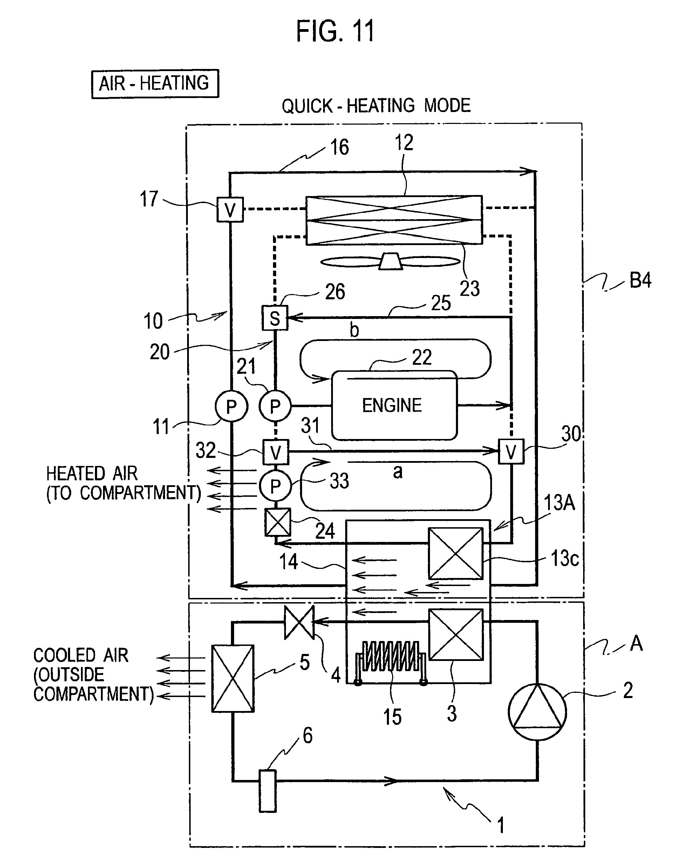

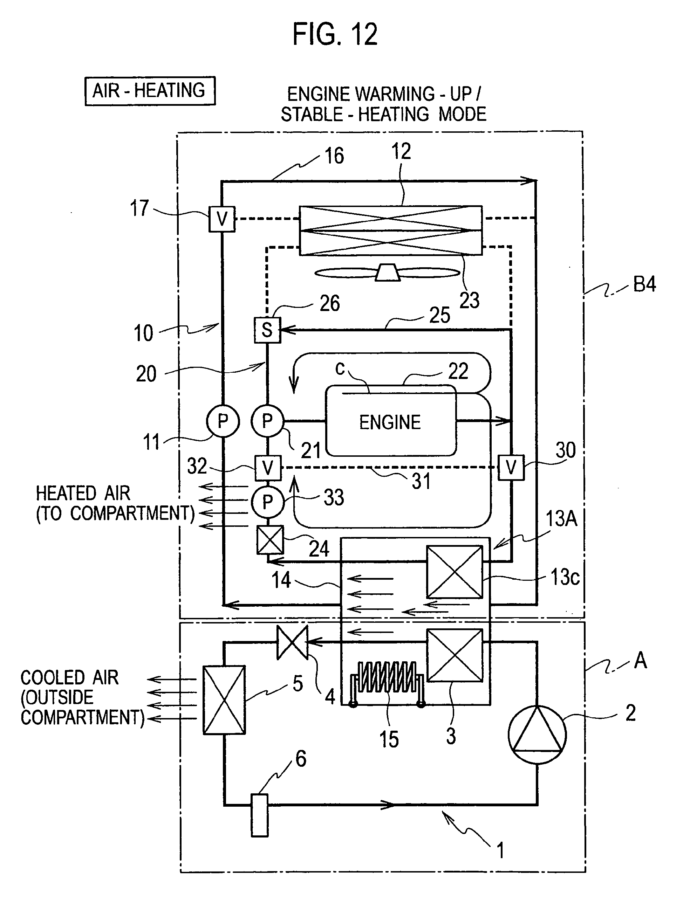

According to the above configurations, the third refrigerant can be selectably flown in two modes. In an engine warming-up / stable-heating mode, the third refrigerant circulates along an integrated circulation path *c* (see Fig. 12) to flow integrally through both a side with the engine 22 and the driving-system radiator 23 and another side with the heater core 24 and the internal heat exchanger 13A. In a quick-heating mode, the third refrigerant circulates along divided circulation paths *a* and *b* (see Fig. 11) to flow independently each of the side with the engine 22 and the driving-system radiator 23 (divided path *b*) and the other side with the heater core 24 and the internal heat exchanger 13A (divided path *a*).

Since other configurations in the present embodiment is equal or similar to those in the third embodiment, redundant explanations will be omitted by allocating identical numerals to the identical or similar configurations.

On the quick-heating mode of an air-heating operation being selected as shown in Fig. 11, the compressor 2 is driven in the heat-pump type cooling unit A. In the air-heating circulation unit B4, the first flow-path changeover valve 17 is changed over so as to flow the second refrigerant through the radiator-bypass path 16. The fourth flow-path changeover valve 30 and the fifth flow-path changeover valve 32 are changed over so as not to flow the third refrigerant flowing from the engine 22 to the internal heat exchanger 13A and the heater core 24 and so as to flow the third refrigerant flowing from the internal heat exchanger 13A and the heater core 24 to the branching path 31. The first to third pumps 11, 21 and 33 are driven.

As shown by arrows shown in Fig. 11, the two divided paths *a* and *b* are made in the third circulation path 20. Therefore, the third refrigerant heated at the water-cooled condenser 3 radiates only at the heater core 24. The air passing through the heater core 24 is sent into the vehicle compartment for air-heating. Namely, the heat of the third refrigerant is not radiated to the engine 22 as in the first to third embodiments and thereby the quick-heating performance can be improved.

On the engine warming-up / stable-heating mode of the air-heating operation being selected as shown in Fig. 12, the fourth flow-path changeover valve 30 and the fifth flow-path changeover valve 32 are changed over so as not to flow the third refrigerant to the branching path 31. The first to third pumps 11, 21 and 33 are driven.

As shown by arrows shown in Fig. 12, the integrated circulation path c is made in the third circulation path 20. Therefore, the third refrigerant heated at the water-cooled condenser 3 radiates at the heater core 24 and at the engine 22 until the engine 22 is warmed up to a prescribed temperature value. Therefore, fuel efficiency improvement can be achieved through friction reduction and shortening warming-up time with respect to the engine 22.

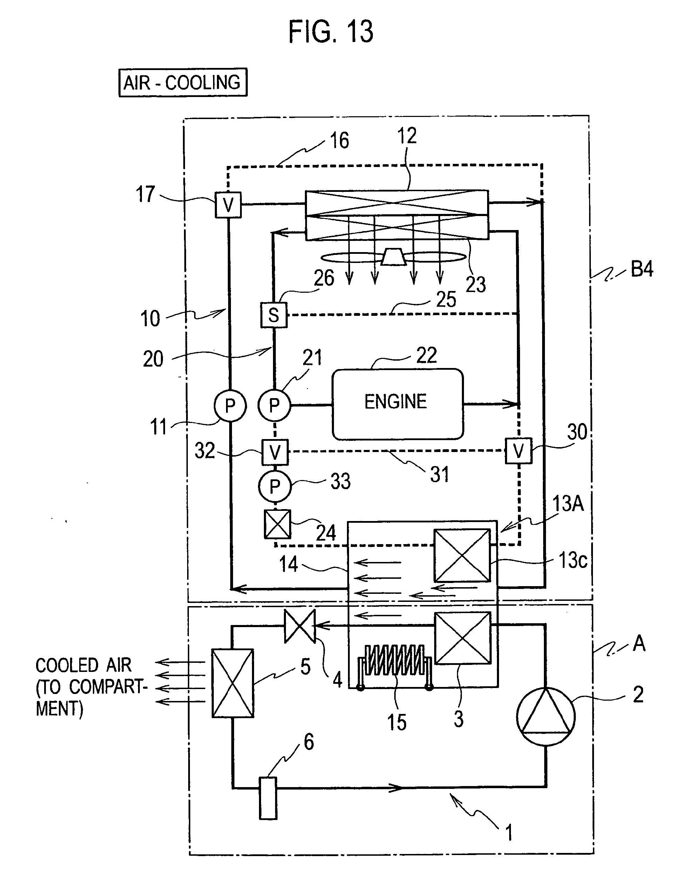

On an air-cooling operation being selected as shown in Fig. 13, the compressor 2 is driven in the heat-pump type cooling unit A. In the air-heating circulation unit B4, the first flow-path changeover valve 17 is changed over so as to flow the second refrigerant through the air-conditioning radiator 12. In addition, the fourth flow-path changeover valve 30 is changed over so as not to flow the third refrigerant through the heat-receiving section 13c in the internal heat exchanger 13A and the heater core 24. Further, the fifth flow-path changeover valve 32 is changed over so as not to flow the third refrigerant through the branching path 31. The first pump 11 and the second pump 21 are driven.

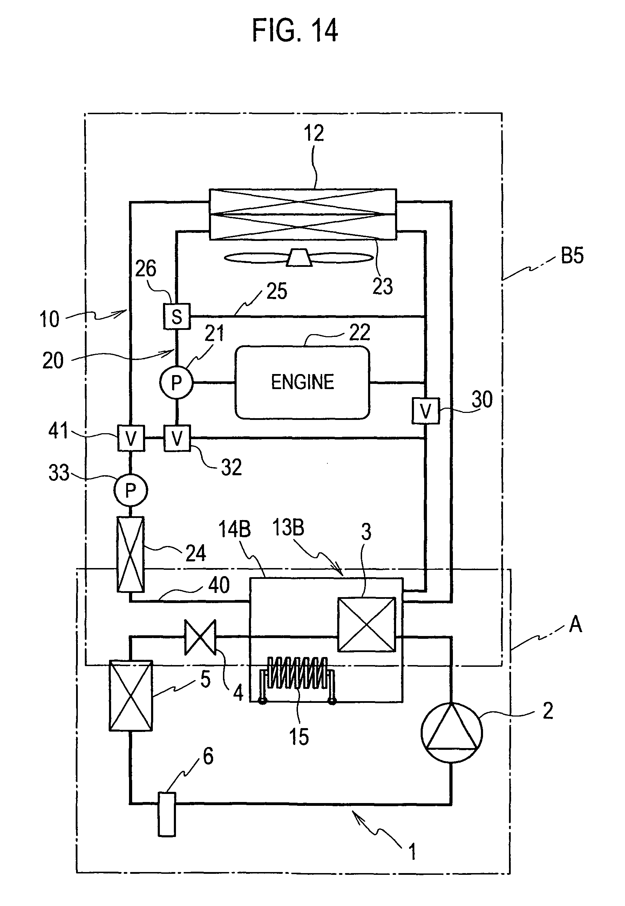

Next, a fifth embodiment of an air conditioning system for a vehicle according to the present invention will be explained with reference to Figs. 14 to 17. In the fifth embodiment as shown in Fig. 14, the second circulation path 10 and the third circulation path 20 on an air-heating circulation unit B5 is different as compared with the third embodiment.

Specifically, some segment of the second circulation path 10 and the third circulation path 20 is provided as a combined path 40 for each of the paths 10 and 20. A unit container 14B and the heater core 24 are provided on the combined path 40. The unit container 14B is a refrigerant-confluent unit, into which the second refrigerant in the second circulation path 10 and the third refrigerant in the third circulation path 20 flow together. Within the refrigerant-confluent unit, heat-exchanging between the both refrigerants is achieved. Namely, the unit container (refrigerant-confluent unit) 14B constitutes an internal heat exchanger 13B. Consequently, an identical refrigerant is used as the second and third refrigerants in the present embodiment. Therefore, the refrigerant flowing along the second circulation path 10 and the third circulation path 20 may be merely referred as the "refrigerant", hereinafter.

In addition, the heater core 24 is provided on the combined path 40. Further, a sixth flow-path changeover valve (sixth flow-path changeover unit) 41 is provided at a branch point from the combined path 40 to the second and third circulation paths 10 and 20. The sixth flow-path changeover valve 41 changes over the refrigerant flowing to the second circulation path 20 or to the third circulation path 20.

Furthermore, any air-conditioning bypass path (such as the radiator-bypass path 16 and the heat-exchanger-bypass path 18) and the first flow-path changeover valve 17 are not provided.

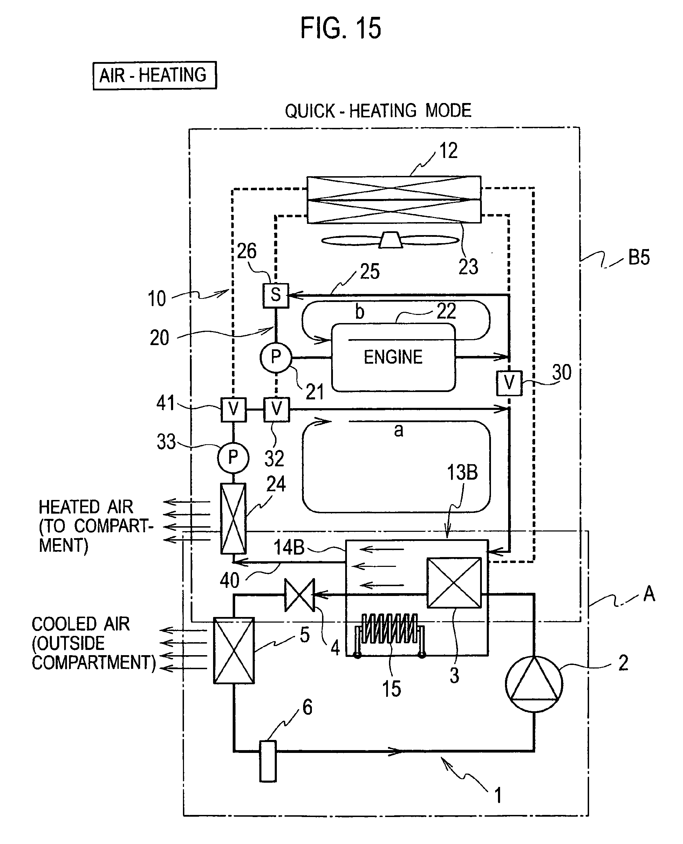

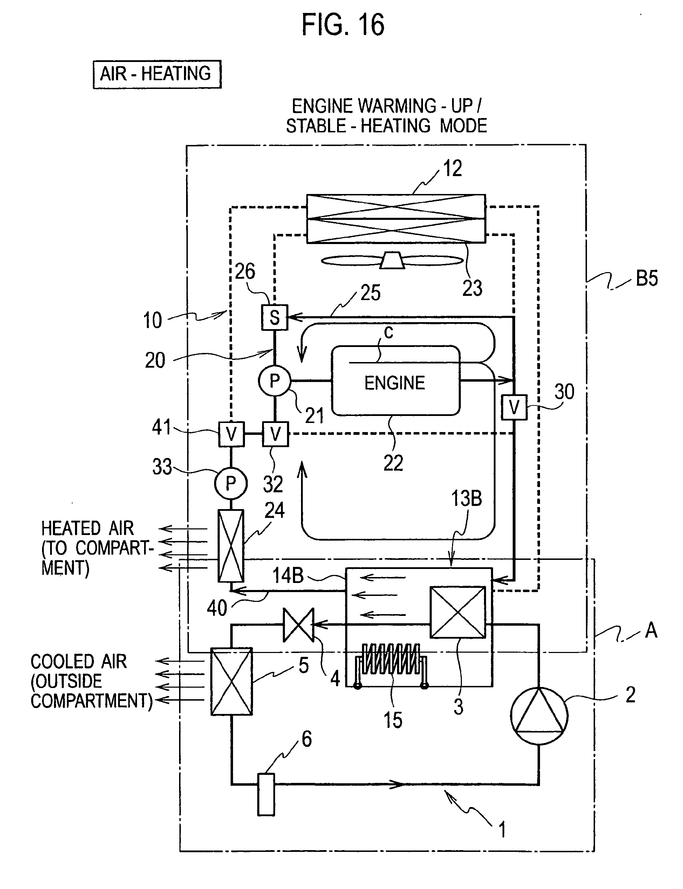

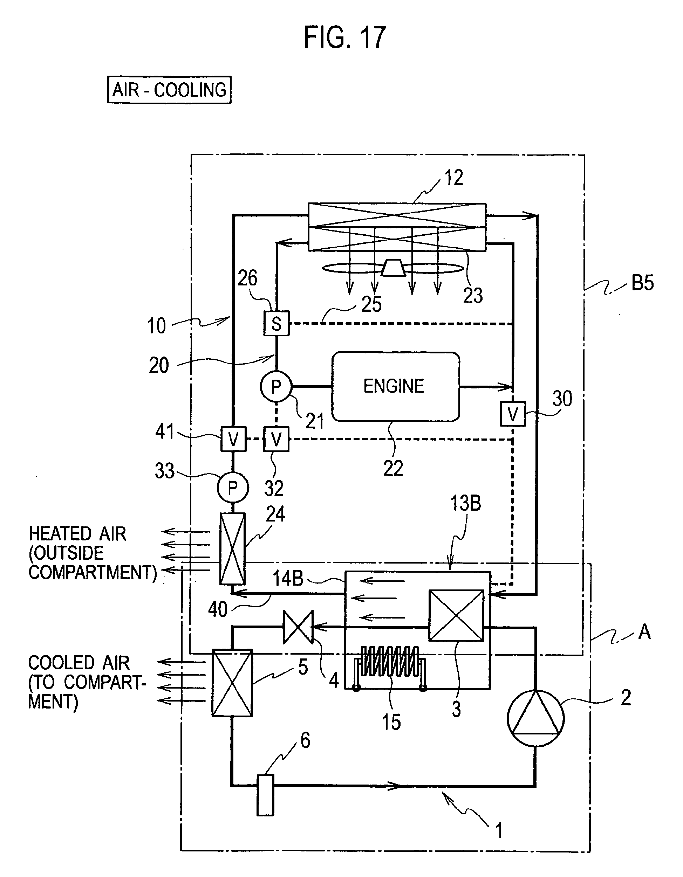

In the quick-heating mode of the air-heating operation as shown in Fig. 15, the divided circulation paths *a* and *b* of the third refrigerant can be made in the third circulation path 20. In the an engine warming-up / stable-heating mode as shown in Fig. 16, the integrated circulation path c of the third refrigerant can be made in the third circulation path 20. On the air-cooling operation being selected as shown in Fig. 17, the waste heat of the water-cooled heat exchanger 3 can be discharged to the air outside the vehicle compartment at the air-conditioning radiator 12 and the waste heat of the engine 22 can be discharged to the air outside the vehicle compartment at the driving-system radiator 23. Note that, since the refrigerant flows through the heater core 24 during the air-cooling operation in the present embodiment, the heated air passing through the heater core 24 can be sent selectably into the vehicle compartment or outside the vehicle compartment. In addition, heat-radiation from the heater core can be prevented by blocking air-flow to the heater core 24 using a mixture door or the like.

Further, some segment of the second circulation path 10 and the third circulation path 20 is integrated as the combined path 40 in the present embodiment. Furthermore, since the divided circulation paths *a* and *b* or the integrated circulation path c can be made, configurations of the air-heating circulation unit B5 can be simplified.

In the first to fifth embodiments, plural pumps are provided (the first and second pumps 11 and 21 in the first embodiment, the first to third pumps 11, 21, and 33 in the fourth embodiment, the first and third pumps 11 and 33 in the fifth embodiment). However, only a single pump may be provided so as to drive plural liquid pumping unit by the single pump. In this manner, cost for the pump(s) can be reduced and configurations of the air-heating circulation unit B1 to B5 can be simplified.

In the first to fifth embodiments, the driving-system heating element (heating element in a vehicle driving system) is the engine 22 with low water temperature. However, the driving-system heating element may be a fuel-cell stuck or the like.

## Claims

1. An air conditioning system for a vehicle, comprising
a heat-pump type cooling unit (A) including a first circulation path (1) in which first refrigerant circulates and
an air-heating unit (B1 to B5) including a second circulation path (10) in which second refrigerant circulates and a third circulation path (20) in which a third refrigerant circulates; each of the second and third refrigerants being liquid and capable of taking sensible heat change due to heat-changing,
wherein,
on the first circulation path (1), provided are
a compressor (2) for compressing the first refrigerant,
a condenser (3) for radiating heat of the first refrigerant to the second refrigerant and also provided on the second circulation path (10),
an expansion unit (4) for expanding the first refrigerant, and
an evaporator (5) for heat-exchanging between the first refrigerant expanded by the expansion unit (4) and air to cool the air;
on the second circulation path (10), provided are
a first pump (11) for circulating the second refrigerant,
an air-conditioning radiator (12) for radiating heat of the second refrigerant, and
a first flow-path changeover unit (17) for changing over the second refrigerant flowing to flow into the air-conditioning radiator (12) or to bypass the air-conditioning radiator (12);
on the third circulation path (20), provided are
a second pump (21) for circulating the third refrigerant,
a driving-system heating element (22) for heat-exchanging with the third refrigerant,
an internal heat exchanger (13, 13A, 13B) for heat-exchanging with the second refrigerant to heat the third refrigerant,
a heater core (24) for heat-exchanging between the third refrigerant and air to heat the air,
a driving-system radiator (23) for radiating heat of the third refrigerant, and
a second flow-path changeover unit (26) for changing over the third refrigerant flowing to flow into the driving-system radiator (23) or to bypass the driving-system radiator (23) based on temperature of the third refrigerant; and
the system is configured to send the air passing through the evaporator (5) or the air passing through the heater core (24) into a vehicle compartment selectably.

2. The air conditioning system according to claim 1, wherein, the air-conditioning radiator (12) and the driving-system radiator (23) are provided integrally.

3. The air conditioning system according to claim 1 or 2, wherein,
the internal heat exchanger (13) includes a heat-radiating section (13a) and a heat-receiving section (13b),
the heat-radiating section (13a) and the heat-receiving section (13b) are made coherent, and the second refrigerant flows through the heat-radiating section (13a) and the third refrigerant flows through the heat-receiving section (13b).

4. The air conditioning system according to claim 1 or 2, wherein,
the internal heat exchanger (13A) includes a heat exchanger (13c) through which at least one of the second and third refrigerants flows, and
the heat exchanger (13c) is provided within a flowing path through which another of the second and third refrigerants flows.

5. The air conditioning system according to claim 1 or 2, wherein,
the internal heat exchanger (13B) is a refrigerant-confluent unit (14B) into which the second and third refrigerants flow together.

6. The air conditioning system according to any one of claims 1 to 5, wherein,
a third flow-path changeover unit (19) for changing over the second refrigerant flowing to flow into the internal heat exchanger (13) or to bypass the internal heat exchanger (13), is further provided on the second circulation path (10).

7. The air conditioning system according to any one of claims 1 to 5, wherein,
a fourth flow-path changeover unit (30) for changing over whether or not to flow the third refrigerant to the internal heat exchanger (13) and the heater core (24), is further provided on the third circulation path (20).

8. The air conditioning system according to any one of claims 1 to 7, wherein,
the system is configured to make the third circulation path (20) into two circulation forms selectably,
in one of the circulation forms, the third refrigerant circulates along an integrated circulation path (c) integrally to flow through the driving-system heating element (22), the driving-system radiator (23), the heater core (24) and the internal heat exchanger (13A), and
in another of the circulation forms, the third refrigerant circulates respectively along one divided circulation path (a) to flow through the driving-system heating element (22) and the driving-system radiator (23) and another divided circulation path (b) to flow through the heater core (24) and the internal heat exchanger (13A).

9. The air conditioning system according to any one of claims 1 to 7, wherein,
a combined path (40) is provided on the second and third circulation paths (10, 20) and commonly belongs to the second and third circulation paths (10, 20),
the heater core (24) is provided on the combined path (40),
the system is configured to make the third circulation path (20) into two circulation forms selectably,
in one of the circulation forms, the third refrigerant circulates along an integrated circulation path (c) integrally to flow through the driving-system heating element (22), the driving-system radiator (23), the heater core (24) and the internal heat exchanger (13B), and
in another of the circulation forms, the third refrigerant circulates respectively along one divided circulation path (*a*) to flow through the driving-system heating element (22) and the driving-system radiator (23) and another divided circulation path (*b*) to flow through the heater core (24) and the internal heat exchanger (13B).

10. The air conditioning system according to any one of claims 1 to 9, wherein,
the pumps (11, 21, 33) in the air-heating unit (B1 to
B5) are integrated by a single pump.

11. The air conditioning system according to any one of claims 1 to 10, wherein,
a heater (15) is provided on at least one of the second and third circulation paths (10, 20).
